Europäisches Patentamt

European Patent Office

Office européen des brevets

(19)

(11) Numéro de publication : **0 395 510 B1**

(12)                    **FASCICULE DE BREVET EUROPEEN**

(45) Date de publication du fascicule du brevet :
**15.06.94 Bulletin 94/24**

(51) Int. Cl.$^5$ : **H01J 47/26, G01T 1/29**

(21) Numéro de dépôt : **90401127.7**

(22) Date de dépôt : **25.04.90**

(54) **Procédé et dispositif pour déterminer la distribution des rayons beta- émergeant d'une surface.**

(30) Priorité : **27.04.89 FR 8905605**

(43) Date de publication de la demande :
**31.10.90 Bulletin 90/44**

(45) Mention de la délivrance du brevet :
**15.06.94 Bulletin 94/24**

(84) Etats contractants désignés :
**DE GB IT SE**

(56) Documents cités :
**FR-A- 2 111 992
GB-A- 2 190 787
NUCLEAR INSTRUMENTS AND METHODS.
vol. 176, 1980, AMSTERDAM NL pages 239 -
244; Petersen et al.: "The multistep avalanche
chamber as a detector in radiochromatography imaging"**

(56) Documents cités :
**IEEE TRANSACTIONS ON NUCLEAR
SCIENCE. vol. 35, no. 1, février 1988, NEW
YORK US pages 483 - 486; G. Charpak et al.:
"Some applications of the imaging proportionnal chamber"
"Gas discharge tubes", 1964, H.C. v/d Horst,
Philips Technical Library.**

(73) Titulaire : **BIOSPACE INSTRUMENTS
13, rue Thouin
F-75005 Paris (FR)**

(72) Inventeur : **Charpak, Georges
37, rue de la Plaine
F-75020 Paris (FR)**

(74) Mandataire : **Fréchède, Michel et al
Cabinet Plasseraud
84, rue d'Amsterdam
F-75009 Paris (FR)**

## Description

La présente invention concerne un procédé et un dispositif pour la détermination de la distribution des rayons β émergeant de la surface d'un corps, notamment d'une couche mince, contenant des radio-éléments émetteurs de rayons β.

On sait que de nombreuses techniques, utilisées notamment en biologie, biochimie, médecine et chimie, mettent en oeuvre la détermination de la distribution des rayons β émis par les radio-éléments présents dans des corps à étudier.

La technique la plus ancienne et la plus communément utilisée consiste à appliquer un film photographique sur la surface émettrice des rayons β et à observer, après développement, le noircissement du film provoqué par les rayons β reçus par celui-ci. Mais cette technique exige des temps de pose très longs, de plusieurs jours, voire de plusieurs semaines ou même plusieurs mois.

Pour accélérer les mesures, on a déjà proposé de mettre en oeuvre un détecteur de rayons β comportant une chambre à avalanches contenant un gaz entre deux électrodes, constituées par des grilles parallèles, dont l'une forme anode et l'autre cathode contre laquelle la surface à observer est appliquée, chambre dans laquelle les rayons β, émis par cette surface, libèrent des électrons par ionisation du gaz entre les électrodes en formant des avalanches qui ionisent des atomes du gaz, les atomes ainsi ionisés produisant une émission de lumière, qui après amplification de brillance par des amplificateurs de brillance (nécessaire du fait de sa faible intensité), est détectée par des caméras vidéo, notamment du type CCD (dispositif à couplage de charge), ce qui permet la localisation des points d'entrée, dans le volume gazeux de la chambre, des rayons β émis par les radio-éléments de la surface à observer.

Une telle technique est décrite dans un document CERN-EP/88-165 du 25 novembre 1988 de MM. CHARPAK, DOMINIK et ZAGANIDIS.

Si cette technique permet de déterminer bien plus rapidement que la méthode photographique la distribution des rayons β issus d'une surface, elle exige par contre un matériel coûteux, notamment du fait du prix élevé des amplificateurs de brillance et des caméras de type CCD, et la sensibilité des caméras de type CCD n'est pas utilisée au maximum, du fait que ces caméras sont surtout sensibles à la lumière visible, tandis que la lumière émise par les avalanches du dispositif décrit dans l'article précité n'est en général pas concentrée dans le domaine spectral visible et est d'une intensité relativement faible, ce qui exige un amplificateur de lumière.

On sait en outre que, dans une chambre contenant un gaz, entre deux grilles-électrodes parallèles entre lesquelles est appliquée une tension continue V, il existe une valeur seuil Vs de cette tension V (fonction du gaz remplissant la chambre) à partir de laquelle, à la suite d'une ionisation du gaz sous l'effet du passage d'une particule ionisante, une étincelle se produit et cette étincelle court-circuite les deux électrodes.

Un tel phénomène peut être mis en oeuvre pour réaliser un détecteur ou compteur de paticules fortement ionisantes, telles que des particules α, chaque particule provoquant une étincelle qui court-circuite les grilles-électrodes en arrêtant le détecteur pendant un court instant ; puis celui-ci est à nouveau prêt pour compter une nouvelle particule.

Par contre, un tel type de détecteur est très difficile à mettre au point pour la détection des particules β qui ont un faible pouvoir ionisant, car il est très difficile de régler la tension continue V à un seuil Vs′ tel que seuls les rayons β produisent des étincelles qui sont détectées, sans production d'étincelle dans la chambre d'ionisation par les rayons cosmiques ou par les électrons émis par l'électrode constituant la cathode.

On a toutefois proposé de réaliser des chambres à avalanches, mais à plusieurs étages, pour constituer des détecteurs de rayons β (et éventuellement de neutrons lents) par exemple dans les deux articles ci-après :
- PETERSEN, CHARPAK, MELCHART et SAULI dans Nuclear Instruments and Methods 176 (1980), p. 239-244 ; et
- CHARPAK, MELCHART, PETERSEN et SAULI dans IEEE Transactions on Nuclear Sciences, Vol. NS-28 n°1, Feb. 1981, p. 849-851.

Dans ce type de détecteur avec une structure à multiétages, on prévoit :
- un premier étage de préamplification, qui comporte une première chambre entre deux grilles-électrodes parallèles - dont une première grille constituant cathode, contre laquelle est appliquée la surface à examiner émettrice de rayons β, et une seconde grille, polarisée positivement par rapport à la première - entre lesquelles est appliquée une tension continue , apte à réaliser une préamplification de gain faible, de l'ordre de $10^3$ à $10^4$ ;
- un deuxième étage de transfert, qui comporte une deuxième chambre délimité par des grilles-électrodes auxiliaires ; et
- un troisième étage de multiplication, qui comporte une troisième chambre dans laquelle les électrons, ayant traversé la seconde grille précitée du premier étage et l'étage de transfert, sont multipliés à nouveau entre deux grilles-électrodes parallèles en donnant lieu à des avalanches qui peuvent être localisées par divers moyens électroniques.

Si le champ électrique entre les deux grilles de la chambre du troisième étage est tel que les ions produits dans l'avalanche ne peuvent retourner dans la chambre du premier étage à travers l'étage de transert du fait de grilles-électrodes auxiliaires soumises à un champ pulsé approprié, on empêche pendant un certain temps le transfert, sur la cathode d'entrée de la première chambre, des ions qui risqueraient de produire une nouvelle émission d'électrons par cette cathode et donc une nouvelle avalanche dans la troisième chambre, qui provoquerait une décharge permanente auto-entretenue.

Une telle disposition à trois étages ou chambres, avec des grilles-électrodes pulsées dans le deuxième étage, présente l'inconvénient d'exiger des moyens de réglage, difficiles à contrôler, pour éviter le retour vers la première chambre d'ions résultant des avalanches ; ceci permet toutefois d'accroître le gain de la troisième chambre à un niveau tel que des étincelles visibles s'y produisent, mais avec l'inconvénient que les étincelles ainsi produites dans la troisième chambre sont des filaments relativement étendus dont l'observation ne permet pas une localisation précise des points d'émergence des rayons β hors de la surface émissive à observer, qui est appliquée contre la cathode d'entrée.

On connaît également des détecteurs de particules de type Geiger dans lesquels un gaz ou vapeur organique (alcool) est ajouté à un gaz noble et où un phénomène d'auto-extinction de la décharge est obtenu, en raison de l'existence d'une gaine d'ions positifs lents et d'une réduction du champ proche du fil.

Ce type de détecteur a été décrit dans le document "Gas discharge tubes" publié en 1964 par H.L. VAN DER HORST PHILIPS TECHNICAL LIBRARY. Un tel processus ne peut cependant être mis en oeuvre dans les chambres multi-étages précédemment citées.

La présente invention a pour objet de palier les inconvénients précités des techniques antérieures en permettant de réaliser un procédé et un dispositif simples de détermination très précise de la répartition des rayons β émis par une surface, avantageusement au moyen d'une lecture optique, sans moyens de réglage compliqués et sans mise en oeuvre d'amplificateur de lumière.

A cet effet, on prévoit selon l'invention
- d'une part, un couplage par impédances électriques (condensateurs, résistances et/ou bobines de self) entre étages du détecteur ; et
- d'autre part, un remplissage gazeux approprié permettant d'obtenir, dans l'étage de multiplication, des étincelles sous forme de points localisés brillants.

L'invention a donc tout d'abord pour objet un procédé pour la détermination de la distribution des rayons β émergeant d'une surface, procédé qui consiste à faire passer ces rayons β à travers :
- un premier étage de préamplification sensiblement proportionnelle, constitué par une première chambre délimitée par deux grilles-électrodes, parallèles entre elles, entre lesquelles est appliquée une tension continue, dont la grille-électrode formant cathode est celle contre laquelle est appliquée ladite surface émettrice de rayon β, et dont la deuxième grille-électrode forme l'anode,
- un second étage de transfert, constitué par une seconde chambre disposée entre la deuxième grille-électrode formant anode et une troisième grille-électrode parallèle à celle-ci et polarisée positivement par rapport à elle ; et
- un troisième étage de multiplication, constitué par une troisième chambre disposée entre cette troisième grille-électrode et une quatrième grille-électrode polarisée anodiquement par une tension continue relativement à cette troisième grille ;
  ces trois chambres étant remplies d'au moins un gaz ;
  et qui est caractérisé en ce que
- d'une part, on réalise un couplage par impédances entre ces quatre grilles-électrodes, de façon, lors de la production d'une impulsion électrique entre la troisième et la quatrième grille électrode par une avalance, à engendrer et appliquer une impulsion de tension négative sur la deuxième grille electrode pour réduire le gain d'amplification de la première chambre constituant étage de préamplification, et
- d'autre part, ledit au moins un gaz est choisi pour que, d'une manière automatique grâce audit couplage par impédances, et à la reduction de gain, les étincelles produites par multiplication dans la troisième chambre ne puissent, sous l'effet du retour d'ions à travers l'étage de transfert vers la cathode de la première chambre, produire une décharge permanente, et que lesdites étincelles se présentent sous forme de points localisés brillants sur la surface de la cathode de celle-ci.

Dans le premier étage est produite, sous l'effet du champ électrique créé entre ces deux grilles-électrodes, une avalanche d'électrons initiée préférentiellement par les électrons d'ionisation libérés dans le gaz contenu dans ce premier étage, près de la grille-cathode de celui-ci, par les rayons β qui pénètrent dans cet étage. Dans le deuxième étage les électrons de l'avalanche précitée sont transférés du premier au troisième étage.

L'invention a également pour objet un dispositif pour la mise en oeuvre du procédé précité, comprenant :

3

- une enceinte remplie d'au moins un gaz et qui comporte

une première chambre de préamplification proportionnelle, délimitée par une première grille-électrode et une deuxième grille-électrode parallèle à la première ;

une deuxième chambre de transfert, délimitée par ladite deuxième grille-électrode et une troisième grille-électrode parallèle à celle-ci ; et

une troisième chambre de multiplication, délimitée par la troisième grille-électrode et une quatrième grille-électrode parallèle à celle-ci ;

- une première source de tension continue, branchée entre la première et la deuxième grilles-électrodes, la première étant polarisée pour constituer, par rapport à la deuxième, une cathode destinée à recevoir sensiblement contre elle la surface émettrice de rayons $\beta$ à examiner ;

- une deuxième source de tension continue pour polariser la troisième grille-électrode positivement par rapport à la deuxième grille-électrode ; et

- une troisième source de tension continue pour polariser la quatrième grille-électrode positivement par rapport à la troisième grille-électrode ;

et caractérisé

en ce qu'il comprend en outre un ensemble d'impédances, constitué par un réseau de condensateurs, résistances et/ou bobines de self, connecté auxdites grilles-électrodes, et

en ce que ledit au moins un gaz est constitué par au moins un gaz rare (notamment argon, néon et/ou hélium) additionné d'une faible proportion d'au moins un gaz organique (notamment triethylamine, tétraméthylpentane et/ou méthylal) ce qui permet par réduction du gain d'amplification de la première chambre constituant étage d'amplification d'empêcher l'amplification d'électrons secondaires produits par l'impact sur la deuxième grille- électrode d'ions positifs provoqués par une avalanche dans la troisième chambre.

Des modes particuliers de réalisation de l'invention sont indiqués dans les revendications 2, 4 à 7.

On peut noter que le procédé et le dispositif selon l'invention permettent de neutraliser toutes les sources d'électrons secondaires différés éjectés par la cathode du premier étage.

La lumière qui sort du dispositif, en fait produite par les points localisés brillants, est observable par une caméra (notamment une caméra de faible ouverture ou une caméra de type CCD) ou même à l'oeil nu.

On peut connecter la caméra vidéo directement à une calculatrice.

Un tel détecteur, relativement peu coûteux et ne nécessitant ni réglage compliqué, ni matériel cher d'observation a de nombreuses applications, notamment :

- l'imagerie des rayons $\beta$ émis par une surface émettrice appliquée contre la face d'entrée de la première chambre ;

- le comptage, avec un très faible bruit de fond, des rayons $\beta$ émis par des échantillons comportant des radio-éléments, même si leur radioactivité est très faible ; en effet, le bruit de fond du détecteur est de l'ordre de 1 point lumineux brillant ou tache par minute et par cm2, ce qui permet de détecter pratiquement sans bruit de fond des rayons $\beta$ en provenance d'une zone de 1 mm2.

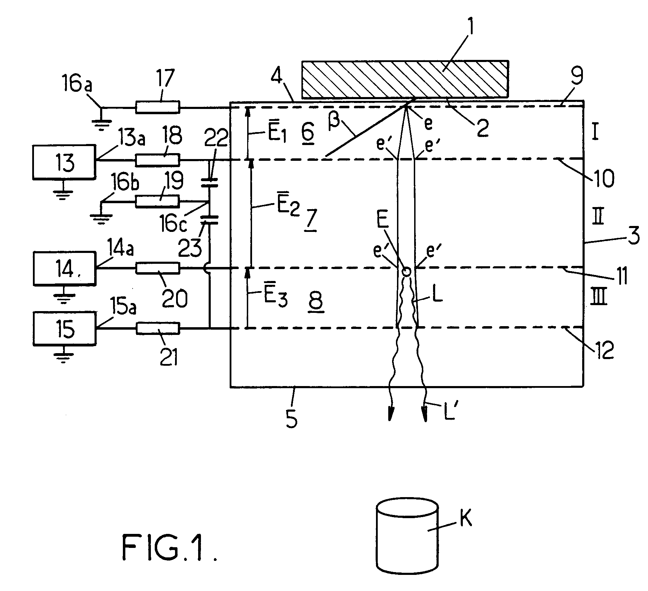

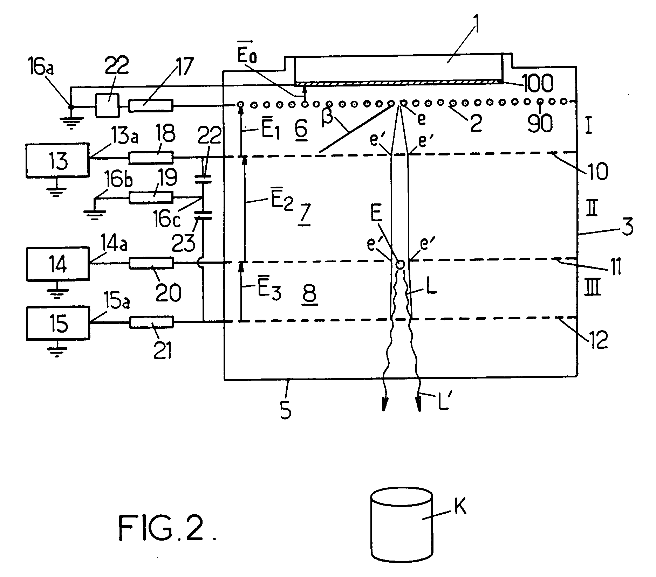

L'invention sera décrite selon deux modes de réalisation préférés en liaison avec les figures 1 et 2.

On va décrire maintenant le premier mode de réalisation d'un détecteur mettant en oeuvre les perfectionnements selon l'invention, avec référence à la figure 1 annexée.

Sur cette figure, on a représenté en 1 un corps comportant des radio-éléments et présentant une surface 2 sensiblement plane qui émet des rayons $\beta$ (référencés $\beta$ sur la figure) dont on désire déterminer la distribution.

Le détecteur proprement dit comprend une enceinte 3 avec une face d'entrée 4 transparente aux rayons $\beta$, constituée par exemple par une feuille en "mylar" aluminisé épaisse de 6 microns, contre laquelle est appliquée la surface 2, et une face de sortie 5 constituée par une fenêtre optique permettant le passage de lumière dans le domaine du visible.

Cette enceinte comporte trois chambres 6, 7 et 8 formant trois étages successifs I, II et III.

La première chambre 6 de l'étage I est une chambre de préamplification des électrons e à l'entrée, dans la chambre 3, des rayons $\beta$ ayant franchi la face d'entrée 2, avec un gain de l'ordre de $10^3$ à $10^4$ ; cette chambre 6 est délimitée par une première grille-électrode 9 et une deuxième grille-électrode 10 parallèle à celle-ci, séparées par un intervalle de 4,3 mm.

La deuxième chambre 7 de l'étage II forme chambre de transfert pour les électrons multipliés $\underline{e}'$ et elle est délimitée par la deuxième grille-électrode 10 et une troisième grille-électrode 11 parallèle à celle-ci, distante de 12 mm.

La troisième chambre 8 constituant le troisième étage III est une chambre de multiplication ou d'ionisation dans laquelle les électrons transférés $\underline{e}'$ provoquent au niveau de la troisième grille 11, notamment aux points de croisement des fils constituant cette grille, des étincelles E qui ont la forme de points lumineux brillants ; la lumière L issue de ces points lumineux se propage à travers cette chambre 8 et traverse la fenêtre optique constituant face de sortie 5 ; cette chambre 8 est délimitée par la troisième grille-électrode 11 et une quatrième grille-électrode 12 parallèle à celle-ci, distante de 5 mm.

Trois sources de tension continue 13, 14 et 15 appliquent, aux points 13a, 14a et 15a respectivement, des tensions continues positives $+ V_1$, $+ V_2$ et $+ V_3$ respectivement par rapport à la masse, à laquelle sont connectés également les points 16a et 16b.

Des résistances 17, 18, 19, 20 et 21, de valeurs $R_1$, $R_2$, $R_3$, $R_4$ et $R_5$ respectivement, sont connectées entre le point 16a et la grille-électrode 9, le point 13a et la grille-électrode 10, le point 16b et le point 16c, le point 14a et la grille-électrode 11, et le point 15a et la grille-électrode 12, respectivement, tandis que deux condensateurs 22 et 23 de capacités $C_1$ et $C_2$ respectivement, sont connectés le premier entre le point 16c et la grille 10 et le second entre le point 16c et la grille 12; l'ensemble 17, 18, 19, 20, 21, 22, 23 forme un dispositif de régulation à impédances empêchant automatiquement la production et l'amplification d'électrons secondaires produits en particulier par le retour, vers la grille-cathode 9, des ions positifs émis par une étincelle E dans la troisième chambre 8.

Enfin, l'enceinte 3 est remplie, sensiblement à la pression athmosphérique, d'un mélange gazeux comportant un gaz rare, tel que l'argon, le néon ou l'hélium, et un gaz organique, tel que la triéthyamine, le tétraméthylpentane ou le méthylal.

On a utilisé en particulier dans cet exemple un mélange d'argon et de 2% de triethylamine, avec les valeurs ci-après des tensions, résistances et capacités, respectivement en volts, mégohms et picofarads, données à titre d'exemple non limitatif :

| $V_1$ | $V_2$ | $V_3$ | $R_1$ | $R_2$ | $R_3$ | $R_4$ | $R_5$ | $C_1$ | $C_2$ |
|---|---|---|---|---|---|---|---|---|---|
| 3125 | 4000 | 7325 | 2 | 100 | 2 | 10 | 100 | 470 | 470 |

Les grilles-électrodes, notamment la troisième grille au niveau de laquelle se produisent les étincelles en forme de points localisés brillants, sont constituées par des fils métalliques, disposés suivant deux directions perpendiculaires entre elles, ayant un diamètre de 10 à 200 microns, par exemple de l'ordre de 50 microns deux fils successifs étant écartés l'un de l'autre d'une distance de 100 à 2000 microns, par exemple de l'ordre de 500 microns, dans chaque direction.

Sur la figure, on a également indiqué la direction des champs électriques $E_1$, $E_2$ et $E_3$ produits par l'ensemble des sources de tension, résistances et condensateurs.

La lumière L', essentiellement dans le domaine visible, qui traverse la face de sortie 5, peut être observée soit à l'oeil nu, soit au moyen d'une caméra K, par exemple une caméra photographique de faible ouverture ou une caméra vidéo du type CCD, sans nécessiter d'amplificateur de lumière.

Le fonctionnement du détecteur, qui vient être décrit avec référence à la figure unique, est le suivant.

Un rayon β émergeant de la surface 2 du corps radioactif 1 traverse la face d'entrée 4 et se présente dans l'enceinte 3, au niveau de la première grille-électrode 9 formant cathode, sous la forme d'un ou de quelques électrons d'ionisation e qui sont amplifiés ou multipliés dans la première chambre 6 en donnant quelques milliers d'électrons e'qui se déplacent vers la grille-électrode 10 formant anode, sous l'effet du premier champ électrique $E_1$.

On notera que c'est l'électron e le plus proche de la cathode 9, c'est-à-dire celui du rayon β à son entrée, qui donne l'avalanche ou nuage d'électrons e' le plus important et qui produira la suite des phénomènes décrits ci-après ; c'est ce qui permettra de localiser avec précision le rayon β arrivant de la surface 2 et traversant la face 4 au niveau où il frappe la grille-électrode 9.

Une fraction des électrons e' (environ 10%) traverse ensuite la deuxième grille-électrode 10 et se déplace, sous l'effet du champ électrique $E_2$, vers la troisième grille-électrode 11 en traversant la chambre de transfert 7.

Enfin, les électrons e' traversent la grille 11 et provoquent, après une deuxième multiplication au niveau de celle-ci, plus précisément au croisement des fils constitutifs de cette grille, des décharges ou étincelles sous forme de points lumineux brillants E, alors que, dans les détecteurs antérieurs à étincelles, on obtenait une étincelle constituée par un filament raccordant les deux grilles-électrodes délimitant la troisième chambre.

En outre ce point lumineux ou tache cathodique E se trouve exactement en alignement (dans la direction perpendiculaire aux grilles-électrodes parallèles) avec l'impact, sur la grille-électrode 9 formant cathode, du rayon β émis par la surface 2 et représenté par l'électron e, ce qui permet de bien localiser cet impact, et de plus la lumière L émise est dans le domaine du visible, donc facile à observer à l'oeil nu ou à photographier avec une caméra ordinaire et/ou filmer avec une caméra vidéo, par exemple du type CCD, éventuellement reliée à une calculatrice (non représentée).

L'avalanche formant point lumineux E dans la troisième chambre 8 produit une impulsion électrique entre

5

les grilles-électrodes 11 et 12 et celle-ci, par le réseau à impédances 17, 18, 19, 20, 21, 22, 23, réduit le gain dans la première chambre 6 entre les grilles-électrodes 9 et 10 en appliquant une impulsion de tension négative sur la grille-électrode 10, d'où empêchement de l'amplification d'électrons secondaires produits par l'impact sur la grille-électrode 9 d'ions positifs engendrés par l'étincelle E et donc d'une émission intempestive d'électrons par cette grille-électrode constituant cathode.

Eventuellement, si les rayons β émis par la surface 2 du corps 1 sont peu pénétrants (par exemple si le corps 1 comporte du tritium comme radioélément), il est possible de rendre cette surface 2 conductrice en évaporant sur elle une couche conductrice mince et d'utiliser cette surface 2 pour constituer l'ensemble de la face d'entrée 4 et de la cathode 9 du détecteur.

Lorsque la surface émettrice de rayons β est introduite dans la chambre et doit servir de cathode, ainsi que mentionné précédemment, il est nécessaire de rendre cette surface conductrice par un dépôt mince d'un matériau conducteur, tel que l'or. Il est cependant possible d'éviter l'opération précitée en plaçant la surface précitée derrière une cathode constituée par une grille transparente aux électrons.

Dans ce cas, ainsi que représenté en figure 2, cette cathode 90 peut être constituée par des fils parallèles de diamètre compris entre 20 et 60 μm et espacés de 300 à 600 μm. La cathode 90 peut être constituée par des fils entrelacés formant une grille ou bien par une grille formée par électroérosion.

De préférence la surface métallisée 100 de l'objet 1 est placée à une distance de l'ordre de 3 mm de la cathode 90 et un champ électrique $\overline{Eo}$ est appliqué entre la surface de l'échantillon et la grille de la cathode 90, le champ $\overline{Eo}$ étant par exemple inférieur ou égal à 0,2 $\overline{E1}$, $\overline{Eo} \leqq 0,2\ \overline{E1}$, le champ $\overline{Eo}$ étant faible par rapport au champ électrique $\overline{E1}$ qui règne dans l'espace I de multiplication.

La majorité des électrons d'ionisation produite dans l'espace entre l'échantillon 1 et la grille de cathode 90 sont transférés dans l'espace de multiplication I suivant les lignes de force du champ électrique, lesquels dans 99% des cas pénètrent dans l'espace de multiplication. En particulier, dans le cas où la source émettrice, contenue dans le corps 1, est constituée de tritium, dont les électrons ont un parcours de l'ordre de 100 μm, dans un mélange contenant surtout du Xénon à la pression atmosphérique, ce parcours pouvant être réduit à quelques dizaines de microns à pression plus élevée, les électrons d'ionisation sont produits très près de la surface métallisée 100, et, après transfert le long des lignes de force électrique, ces électrons arrivent dans l'espace de multiplication en restituant une image fidèle des rayons β émis par la surface métallisée 100 de l'objet 1, avec une distorsion qui épouse les trajectoires des lignes de champ $\overline{Eo}$. Ces trajectoires sont aisées à calculer mathématiquement par les lois de l'électrostatique et un calcul permet de restituer l'image exacte de la distribution initiale des rayons β émis par l'objet 1.

De manière avantageuse, pour engendrer le champ $\overline{Eo}$ il est possible de couvrir la surface émettrice d'une couche mince électriquement conductrice 100, en or par exemple, laquelle servira à appliquer le potentiel Vo générateur du champ électrique $\overline{Eo}$ par rapport à la cathode 90. Le potentiel électrique Vo peut alors être pris égal à 300 Volts par exemple.

En fonctionnement, la surface de l'objet 1 en regard de la cathode 90 est placée à une distance d comprise entre 1 et 5 mm de celle-ci. Un champ électrique $\overline{Eo} \leqq 0,2 \times \overline{E1}$ est alors engendré entre la surface métallisée 100 et la cathode 90 pour établir un champ de déplacement des électrons du rayonnement β émis vers l'espace de multiplication I. Dans ce but la couche métallisée peut être portée au potentiel de masse, ou de référence, et l'électrode 90 est portée à un potentiel de 300 V par un générateur 22, le potentiel des grilles 10, 11, 12 étant, décalé en conséquence, porté aux valeurs correspondantes V1+300 Volts, V2+300 Volts, V3+300 Volts.

L'avantage essentiel par rapport à l'utilisation directe de cette surface métallisée 100 comme cathode dans l'espace de multiplication est que le dispositif n'est plus sensible aux aspérités et irrégularités de la surface à étudier.

Le mode de réalisation tel que représenté en figure 2 est plus particulièrement avantageux pour des objets 1 ou échantillons de grandes dimensions lors de l'établissement de coupes d'animal entier par exemple.

Comme il va de soi, l'invention ne se limite nullement aux modes d'application et de réalisation qui ont été plus spécialement envisagés ; elle en embrasse, au contraire, toutes les variantes.

## Revendications

1. Procédé pour la détermination de la distribution des rayons β émergeant d'une surface,
   qui consiste à faire passer ces rayons β à travers:
   - un premier étage de préamplification sensiblement proportionnelle, constitué par une première chambre délimitée par deux grilles-électrodes, parallèles entre elles, entre lesquelles est appliquée une tension continue, dont la grille-électrode formant cathode est celle contre laquelle est appliquée ladite surface émettrice de rayons β, et dont la deuxième grille-électrode forme l'anode,

- un second étage de transfert, constitué par une seconde chambre disposée entre la deuxième grille-électrode formant anode et une troisième grille-électrode parallèle à celle-ci et polarisée positivement par rapport à elle ; et
- un troisième étage de multiplication, constitué par une troisième chambre disposée entre cette troisième grille-électrode et une quatrième grille-electrode polarisée anodiquement par une tension continue relativement à cette troisième grille ;

ces trois chambres étant remplies d'au moins un gaz; et qui est caractérisé en ce que

- d'une part, on réalise un couplage par impédances entre ces quatre grilles-électrodes, de façon, lors de la production d'une impulsion électrique entre la troisième et la quatrième grille électrode par une avalanche, à engendrer et appliquer une impulsion de tension négative sur la deuxième grille électrode pour réduire le gain d'amplification de la première chambre constituant étage de préamplification, et,
- d'autre part, ledit au moins un gaz est choisi pour que, d'une manière automatique grâce audit couplage par impédances, et à la réduction de gain, les étincelles produites par multiplication dans la troisième chambre ne puissent, sous l'effet du retour d'ions à travers l'étage de transfert vers la cathode de la première chambre, produire une décharge permanente, et que lesdites étincelles se présentent sous forme de points localisés brillants sur la surface de la cathode de celle-ci.

2. Procédé selon la revendication 1, caractérisé en ce que ledit au moins un gaz est constitué par au moins un gaz rare additionné d'une faible proportion d'au moins un gaz organique.

3. Dispositif pour la mise en oeuvre du procédé selon la revendication 1 ou 2, comprenant :
   - une enceinte (3) remplie d'au moins un gaz et qui comporte :
   - une première chambre (6) de préamplification proportionnelle, délimitée par une première grille-électrode (9) et une deuxième grille-électrode (10) parallèle à la première ;

   une deuxième chambre (7) de transfert, délimitée par ladite deuxième grille-électrode (10) et une troisième grille-électrode (11) parallèle à celle-ci ; et

   une troisième chambre (8) de multiplication, susceptible d'engendrer une avalanche d'électrons, délimitée par la troisième grille-électrode (11) et une quatrième grille-électrode (12) parallèle à celle-ci ;

   - une première source (13) de tension continue, branchée entre la première et la deuxième grilles-électrodes, la première (9) étant polarisée pour constituer, par rapport à la deuxième (10), une cathode destinée à recevoir sensiblement contre elle la surface (2) émettrice de rayons β à examiner ;
   - une deuxième source (14) de tension continue pour polariser la troisième grille-électrode (11) positivement par rapport à la deuxième grille-électrode (10) ; et
   - une troisième source (15) de tension continue pour polariser la quatrième grille-électrode (12) positivement par rapport à la troisième grille-électrode (11) ;

   et caractérisé

   en ce qu'il comprend en outre un ensemble d'impédances, constitué par un réseau de condensateurs (22, 23), résistances (17, 18, 19, 20, 21) et/ou bobines de self, connecté auxdites grilles-électrodes, de façon à coupler électriquement par réaction négative lesdites quatrième et deuxième grille-électrode, et

   en ce que ledit au moins un gaz est constitué par au moins un gaz rare additionné d'une faible proportion d'au moins un gaz organique, ce qui permet par réduction du gain d'amplification de la première chambre constituant étage d'amplification d'empêcher l'amplification d'électrons secondaires produits par l'impact sur la deuxième grille-électrode d'ions positifs provoqués par une avalanche dans la troisième chambre.

4. Dispositif selon la revendication 3, caractérisé en ce que le gaz rare est choisi parmi l'argon, le néon et l'hélium, tandis que le gaz organique est choisi parmi le triéthylamine, le tétraméthylpentane et le méthylal.

5. Dispositif selon la revendication 3 ou 4, caractérisé en ce que les grilles-électrodes (9, 10, 11, 12) sont constituées par des fils métalliques dont l'épaisseur est de l'ordre de 10 à 200 microns, écartés l'un de l'autre d'une distance de l'ordre de 100 à 2000 microns et disposées suivant deux directions perpendiculaires entre elles.

6. Dispositif selon l'une des revendications 3 à 5 précédentes, caractérisé en ce que pour un champ élec-

trique $\overline{E}_1$ appliqué entre ladite deuxième et ladite première grille-électrode (10-9), la surface de l'objet (1) en regard de la cathode (90) est métallisée (100) et placée à une distance d comprise entre 1 et 5 mm de celle-ci, un champ électrique $\overline{E}_0 \leq 0,2\ \overline{E}_1$ est engendré entre surface métallisée (100) et la première grille électrode formant cathode (90) pour établir un champ de déplacement des électrons du rayonnement β émis vers l'espace de multiplication (I).

7. Dispositif selon la revendicaion 6, caractérisé en ce que la couche métallisée (100) étant portée au potentiel de masse, potentiel de référence, la cathode (90) est portée à un potentiel de 300 V, le potentiel des grilles (10), (11), (12) étant décalé en conséquence.


**Patentansprüche**

1. Verfahren zur Verteilungsbestimmung von aus einer Fläche austretenden β-Strahlen, welches zum Durchlassen der β-Strahlen aufweist:
   - eine erste Stufe für eine etwa proportionale Vorverstärkung, welche (Stufe) durch eine erste Kammer gebildet ist, welche durch zwei zueinander parallele Gitter-Elektroden begrenzt ist, zwischen welchen eine Gleichspannung angelegt ist, wobei die eine Kathode bildende Gitter-Elektrode diejenige ist, welcher die β-Strahlen emittierende Oberfläche zugeordnet ist, und wobei die zweite Gitter-Elektrode die Anode bildet,
   - eine zweite Übertragungsstufe, welche durch eine zweite Kammer gebildet ist, welche zwischen der zweiten, die Anode bildenden Gitter-Elektrode und einer dritten Gitter-Elektrode angeordnet ist, die parallel zu der zweiten verläuft und im Vergleich zu dieser positiv gepolt ist, und
   - eine dritte Vervielfachungsstufe, welche durch eine dritte Kammer gebildet ist, die zwischen der dritten Gitter-Elektrode und einer vierten Gitter-Elektrode angeordnet ist, welche durch eine Gleichspannung relativ zu der dritten Gitter-Elektrode anodisch gepolt ist, und bei welchem diese drei Kammern von mindestens einem Gas gefüllt sind, **dadurch gekennzeichnet, daß**
   - einerseits eine Impedanzkopplung zwischen diesen vier Gitter-Elektroden durchgeführt wird, um bei der Erzeugung eines elektrischen Impulses zwischen der dritten und der vierten Gitter-Elektrode durch eine Lawine einen negativen Spannungsimpuls zu erzeugen und an die zweite Gitter-Elektrode anzulegen, um dadurch den Verstärkungsgewinn der ersten, die Vorverstärkungsstufe bildenden Kammer zu verringern, und
   - andererseits das mindestens eine Gas gewählt ist, um automatisch aufgrund der Impedanzkopplung und der Gewinnherabsetzung Funken, die durch Vervielfachung in der dritten Kammer erzeugt worden sind, unter der Wirkung der Ionenrückwärtsbewegung durch die Übertragungsstufe in Richtung der Kathode der ersten Kammer eine ständige Entladung erzeugen zu können, und damit die Funken in Form von Punkten erscheinen, welche auf der Oberfläche der Kathode leuchtend festgelegt sind.

2. Verfahren nach Anspruch 1, **dadurch gekennzeichnet, daß** das zumindest eine Gas durch zumindest ein Edelgas gebildet ist, dem in einem niedrigen Verhältnis zumindest ein organisches Gas beigemengt ist.

3. Vorrichtung zur Durchführung des Verfahrens nach dem Anspruch 1 oder 2, mit:
   - einem Raum (3), der mit mindestens einem Gas gefüllt ist, und welcher aufweist:
   - eine erste Kammer (6) zur proportionalen Vorverstärkung, welche durch eine erste Gitter-Elektrode (9) und eine zweite, zu der ersten parallele Gitter-Elektrode (10) begrenzt ist;
   - eine zweite Übertragungskammer (2), welche durch die zweite Gitter-Elektrode (10) und eine parallel zu dieser verlaufende dritte Gitter-Elektrode (11) begrenzt ist, und
   - eine dritte Vervielfachungskammer (8), die zum Erzeugen einer Elektronenlawine geeignet ist, und welche durch die dritte Gitter-Elektrode (11) und eine zu dieser parallele, vierte Gitter-Elektrode (12) begrenzt ist;
   - einer ersten Gleichspannungsquelle (13), die zwischen die erste und die zweite Gitter-Elektrode geschaltet ist, von welchen die erste (9) entsprechend gepolt ist, um im Verhältnis zu der zweiten Elektrode (10) eine Kathode zu bilden, die dazu bestimmt ist, um die zu prüfende, β-Strahlen emittierende Fläche (2) aufzunehmen;
   - einer zweiten Gleichspannungsquelle (14), um die dritte Gitter-Elektrode (11) positiv bezüglich der zweiten Gitter-Elektrode (10) zu polen, und

- einer dritten Gleichspannungsquelle (15), um die vierte Gitter-Elektrode (12) positiv bezüglich der dritten Gitter-Elektrode (11) zu polen,

**dadurch gekennzeichnet,**

daß außerdem eine Anordnung von Impedanzen, welche durch eine Anzahl Kondensatoren (22, 23), Widerstände (17 bis 21) und/oder Drosselspulen gebildet ist, welche mit den Gitter-Elektroden verbunden sind, um durch negative Rückführung die vierte und zweite Gitter-Elektrode elektrisch zu koppeln, und

daß das zumindest eine Gas durch zumindest ein Edelgas gebildet ist, dem ein geringer Anteil an zumindest einem organischen Gas beigemengt ist, so daß sich durch Verringerung des Verstärkungsgewinns in der ersten Kammer, welche eine Verstärkungsstufe darstellt, die Verstärkung von Sekundärelektronen verhindern läßt, welche durch das Auftreffen auf die zweite Gitter-Elektrode von positiven Ionen erzeugt worden sind, welche durch eine Lawine in der dritten Kammer hervorgerufen worden sind.

4. Vorrichtung nach Anspruch 3, **dadurch gekennzeichnet**, daß das Edelgas unter Argon, Neon und Helium ausgewählt ist, während das organische Gas aus Triethylamin, Tetramethylpentan und Methylal ausgewählt ist.

5. Vorrichtung nach Anspruch 3 oder 4, **dadurch gekennzeichnet**, daß die Gitter-Elektroden (9 bis 12) durch Metalldrähte gebildet sind, deren Dicke in der Größenordnung von 10 bis 200 Mikron liegt und die in einem Abstand in der Größenordnung von 200 bis 2000 Mikron voneinander und in zwei zueinander senkrechten Richtungen angeordnet sind.

6. Vorrichtung nach einem der Ansprüche 3 bis 5, **dadurch gekennzeichnet,** daß durch ein elektrisches Feld $\overline{E}_1$, das zwischen der zweiten und der ersten Gitter-Elektrode (10-9) angelegt ist, die Oberfläche des Objektes (1), welche der Kathode (90) gegenüberliegt, metallisiert (100) und in einem zwischen 1 und 5 mm liegenden Abstand d angeordnet ist, und ein elektrisches Feld $\overline{E}'_o \leq 0,2 \, \overline{E}_1$ zwischen der metallisierten Oberfläche (100) und der die Kathode (90) bildenden, ersten Gitter-Elektrode erzeugt wird, um ein Verschiebefeld der emittierten β-Strahlungselektronen in Richtung auf den Vervielfachungsraum (1) aufzubauen.

7. Vorrichtung nach Anspruch 6, Gleichspannungsquelle **dadurch gekennzeichnet**, daß da die Metallauflage als Bezugspotential auf Massepotential gehalten ist, die Kathode (9) auf einem Potential von 300 V gehalten ist und das Potential der Gitter (10 bis 12) folglich verschoben ist.

## Claims

1. Method for determining the distribution of β rays emerging from a surface,
   which consists in causing these β rays to pass through :
   - a first substantially proportional preamplification stage, formed by a first chamber defined by two electrode grids, parallel to each other, between which a DC voltage is applied, in which the electrode grid forming the cathode is that against which said β ray emitting surface is applied,
   - a second transfer stage, formed by a second chamber disposed between the second electrode grid which forms the anode and a third electrode grid parallel to the latter and biased positively with respect thereto ; and
   - a third multiplication stage, formed by a third chamber disposed between this third electrode grid and a forth electrode grid biased anodically by means of a DC voltage relatively to this third grid ;
      these three chambers being filled with at least one gas ;
      and which is characterized in that
   - on the one hand, impedance coupling is provided between these four electrode grids so as to generate and apply, in case an electric pulse is produced by an avalanche between the third and fourth electrode grid, a negative voltage pulse onto the second electrod grid and thus reduce the gain for amplification of the first chamber which forms a pre-amplifying stage, and
   - on the other hand, said at least one gas is chosen so that, in an automatic way thanks to said impedance coupling and gain reduction, the sparks produced by multiplication in the third chamber cannot, under the effect of the return of ions through the transfer stage to the cathode of the first chamber, cause a permanent discharge, and in that said sparks are in the form of brilliant localized points on the surface of the cathode thereof.

2. Method according to claim 1, characterized in that at least one gas is formed by at least a rare gas to which is added a small proportion of at least one organic gas.

3. Device for implementing the method according to claim 1 or 2, comprising :
   - an enclosure (3) filled with at least one gas and which comprises :
   - a first proportional preamplification chamber (6), defined by a first electrode grid (9) and a second electrode grid (10) parallel to the first one ;
     a second transfer chamber (7), defined by said second electrode grid (10) and a third electrode grid (11) parallel thereto ; and
     a third multiplication chamber (8) able to generate an electron avalanche and defined by the third electrode grid (11) and a forth electrode grid (12) parallel thereto ; and
   - a first DC voltage source (13), connected between the first and second electrode grids, the first one (9) being biased so as to form, with respect to the second one (10), a cathode for receiving substantially against it the $\beta$ ray emitting surface (2) to be examined;
   - a second DC voltage source (14) for biasing the third electrode grid (11) positively with respect to the second electrode grid (10) ; and
   - a third DC voltage source (15) for biasing the fourth electrode grid (12) positively with respect to the third electrode grid (11) ;
     and characterized
     in that it further comprises a set of impedances, formed by a network of capacitors (22,23), resistors (17, 18, 19, 20, 21) and/or self inductances, connected to said electrode grids, and
     in that said at least one gas is formed by at least a rare gas to which a small proportion of at least one organic gas is added, thereby allowing through a reduction of the gain for amplification of the first chamber forming an amplifying stage to inhibit amplification of secondary electrons generated through impact on the second electrode grid of positive ions generated by an avalanche within the third chamber.

4. Device according to claim 3, characterized in that the rare gas is chosen from argon, neon and helium, whereas the organic gas is chosen from triethylamine, tetramethylpentane and methylal.

5. Device according to claims 3 or 4, characterized in that the electrode grids are formed by metalwires whose thickness is about 10 to 200 microns, spaced apart by a distance of about 100 to 2000 microns and disposed in two directions perpendicular to each other.

6. Device according to claim 3, characterized by, for a given electric field $\overline{E}_1$ applied between said second and first electrode grid (10-9), said surface of the body (1) facing the cathode (90) being provided with a conducting layer (100) and placed spaced apart from the latter with a distance $\underline{d}$ comprised between 1 mm and 5 mm, a bias electric field $\overline{E}_0$ being generated with $\overline{E}_0 \leqq 0.2 \times \overline{E}_1$ between said conducting layer (100) and first electrode grid forming cathode (90) so as to establish a transfer field for the electrons of said $\beta$ rays emitted towards said first proportional preamplification chamber (1).

7. Device according to claim 6, characterized by said conducting layer (100) set at the ground potential, said cathode (90) being set at a DC potential of 300 V, corresponding potential of subsequent grids (10), (11), (12) being shifted accordingly.

FIG.1.

FIG.2.